# EUROPÄISCHE PATENTSCHRIFT

(11) **EP 2 087 254 B1**
(45) Veröffentlichungstag und Bekanntmachung des Hinweises auf die Patenterteilung: **06.03.2013**
(21) Anmeldenummer: 07801670.6
(22) Anmeldetag: 16.08.2007
(51) Int. Cl.: F16F 7/09, F16F 9/02

(54) **ANSCHLAGDÄMPFER**
STOP DAMPER
AMORTISSEUR DE BUTEE

(30) Priorität: 26.10.2006 DE 102006050993
(43) Veröffentlichungstag der Anmeldung: 12.08.2009
(73) Patentinhaber: KARL SIMON GmbH & Co. KG, 78733 Aichhalden (DE)
(72) Erfinder: BANTLE, Ulrich, 72186 Empfingen (DE); ESCHLE, Jürgen, 78733 Aichhalden (DE)
(74) Vertreter: Jeck, Anton
(86) Internationale Anmeldenummer: PCT/EP2007/007208
(87) Internationale Veröffentlichungsnummer: WO 2008/049477

(56) Entgegenhaltungen:
- EP-A- 0 841 451
- EP-A- 1 236 925
- WO-A-03/100287
- WO-A-2006/063657
- DE-A1- 10 251 169
- US-A- 4 110 868
- US-A- 4 877 226

## Beschreibung

Die Erfindung betrifft einen Anschlagdämpfer mit einem Dämpferkörper, der einen Aufnahmeraum aufweist, in dem ein Kolben zwischen einer Ausgangs- und einer Einschubstellung verstellbar geführt ist, wobei der Kolben einen Balgabschnitt und ein Dichtelement aufweist, wobei das Dichtelement an einer Gleitfläche des Dämpferkörpers anliegt, und wobei dem Balgabschnitt an der Ausgangsstellung einem Anlegeabschnitt des Dämpferkörpers zugeordnet ist.

Ein derartiger Anschlagdämpfer ist aus der DE 10 2004 060 3980 A1 bekannt. Der Dämpferkörper weist dabei einen Aufnahmeraum auf, der von einer zylindrischen Wandung begrenzt ist. Diese Wandung bildet die Gleitfläche. In den Aufnahmeraum ist ein Kolben mit einem angeformten Balgabschnitt eingesetzt. Der Balgabschnitt trägt ein umlaufendes Dichtelement. Dieses liegt an der Gleitfläche an. An den Kolben ist eine Kolbenstange einteilig angeformt, die aus dem Dämpferkörper herausgeführt ist.

Beim Einschieben der Kolbenstange in den Dämpferkörper wird der Kolben verstellt und es entsteht in dem von dem Balgabschnitt umschlossenen Raum ein Überdruck, der den Balgabschnitt aufbläht. Er legt sich dann an der Gleitfläche an. Aufgrund der dort wirkenden Reibkräfte wird die Einschubbewegung des Kolbens gebremst. Die Kraft wird beispielsweise über eine Tür, Klappe, Schublade, ein Beschlagteil (beispielsweise eines Scharniers) auf die Kolbenstange aufgebracht. Bei einem impulsartigen Auftreffen der Tür, etc. wird der Impuls vom Anschlagdämpfer aufgenommen und es wird schlagartig eine hohe Bremskraft des Balgabschnittes bewirkt. Daher wird ein Teil des Impulses wieder an die Tür, etc. zurückgeleitet. Sie springt dann ein Stück weit zurück, was unerwünscht ist.

Es ist Aufgabe der Erfindung, einen Anschlagdämpfer der eingangs erwähnten Art zu schaffen, der eine benutzerfreundliche Dämpfungscharakteristik aufweist.

Diese Aufgabe wird dadurch gelöst, dass der Anlegeabschnitt zumindest bereichsweise einen sich in Richtung der Einschubbewegung des Kolbens erweiternden Bereich aufweist.

Aufgrund der sich erweiternden Ausbildung des Anlegeabschnittes variiert der Abstand zwischen dem Balgabschnitt und dem Anlegeabschnitt in Richtung seiner Verstellbewegung. Der Abstand des Balgabschnittes ist demnach beispielsweise in dem der Ausgangsstellung zugewandten Bereich klein. Damit lässt sich schnell eine Bremswirkung zwischen dem Balgabschnitt und dem Anlegeabschnitt erzielen, da der Balgabschnitt hierzu nur geringfügig aufgebläht werden muss. Der Kolben bewegt sich nun gleichzeitig in Richtung der Einschubstellung. Somit verbreitert sich auch mit der Kolbenbewegung der mit dem Balgabschnitt in Verbindung stehende Querschnitt des Anlegeabschnittes.

Dem Balgabschnitt muss nun zusätzliche Dehnarbeit zugeführt werden. Dieser Effekt stellt sicher, dass aus der Ausgangsstellung heraus schnell Bremskraft erzeugt wird. Diese wird jedoch nicht stark stoßartig generiert, so dass der Rücksprungeffekt der auftreffenden Tür, etc. zumindest stark verringert ist.

Gemäß einer bevorzugten Ausgestaltung der Erfindung ist es vorgesehen, dass der Anlegeabschnitt konisch, insbesondere als konische Bohrung ausgebildet ist, die einem umlaufenden Wandungsabschnitt des Balgabschnittes zugeordnet ist.

Der Balgabschnitt kann sich umlaufend an die konische Bohrung mit hoher Bremskraft anlegen. Hierbei kann der Anschlagdämpfer insbesondere dergestalt sein, dass der umlaufende Wandungsabschnitt des Balgabschnittes eine zylindrische Kontur aufweist. Damit ist mit fortschreitender Einschubbewegung der Abstandsbereich kontinuierlich vergrößert.

Wenn die Konstruktion so gewählt ist, dass der Balgabschnitt in der Ausgangsstellung dem sich konisch erweiternden Bereich des Anlegeabschnittes zugeordnet ist, dann ist das Rücksprungverhalten des Anschlagdämpfers besonders positiv beeinflusst.

Eine zuverlässige Abdichtung des Druckraums über den gesamten Verstellweg des Kolbens lässt sich dadurch erreichen, dass das Dichtelement zwischen der Ausgangsstellung und der Einschubstellung längs eines zylindrischen Bereiches der Gleitfläche geführt ist.

Wenn vorgesehen ist, dass der Balgabschnitt bei der Einschubbewegung im Anschluss an den Anlegeabschnitt einen zylindrischen Bohrungsbereich oder einen Bohrungsbereich mit geänderten Konizitätswinkel überfährt, dann kann der Dämpfungsverlauf geändert werden. Es lassen sich somit auch degressive oder progressive Dämpfungsverläufe gestalten.

Eine bevorzugte Erfindungsvariante ist dergestalt, dass die Oberflächenrauhtiefe des Dichtelementes und/oder der Gleitfläche und/oder des Anlegeabschnittes von einer periodischen Struktur, beispielsweise einer Rillenstruktur erzeugt ist. Damit ergibt sich eine gute Führung während der Verstellbewegung des Kolbens.

Die Oberflächenstrukturierung verhindert auch ein zu starkes adhäsives Anhaften des Balgabschnittes, was zu einem starken Balgverschleiß führen würde. Hierbei kann es insbesondere vorgesehen sein, dass die Rillen der Rillenstruktur in ihrer Längserstreckung quer zu Bewegungsrichtung des Kolbens angeordnet sind. Die Rillen der Rillenstruktur können dabei umlaufend und quer zur Bewegungsrichtung des Kolbens in die Gleitfläche oder den Anlegeabschnitt eingetieft sein, wobei die Rillen im Winkel ≥ 0 und < 90° zur Bewegungsrichtung des Kolbens stehen.

Bevorzugter Weise kann es vorgesehen sein, dass der Anstellwinkel der Rillen so gewählt ist, dass das ringförmig umlaufende Dichtelement über seinen gesamten Umfang nur eine Rille oder eine geringe Anzahl von Rillen (<20 Rillen) übergreift. Damit ist stets ein Rillenquerschnitt verfügbar, der abhängig von der Elastizität des Dichtelementes einen definierten Luftdurchtrittsspalt bildet, der zum einen ein sauberes Gleiten des Dichtelementes garantiert und zum anderen verhindert, dass aus dem Druckraum zu schnell beim Kompressionshub des Kolbens Luft entweicht.

Die Erfindung wird im Folgenden anhand eines in den Zeichnungen dargestellten Ausführungsbeispieles näher erläutert. Es zeigen:
- Figur 1: in Seitendarstellung und im Vollschnitt einen Anschlagdämpfer;
- Figur 2: in Seitendarstellung und im Vollschnitt einen Dämpferkörper des Anschlagdämpfers gemäß Figur 1,
- Figur 3: ein in der Figur 1 mit III gekennzeichnetes Detail in vergrößerter Darstellung und
- Figur 4: ein in der Figur 1 mit IV gekennzeichnetes Detail in vergrößerter Darstellung.

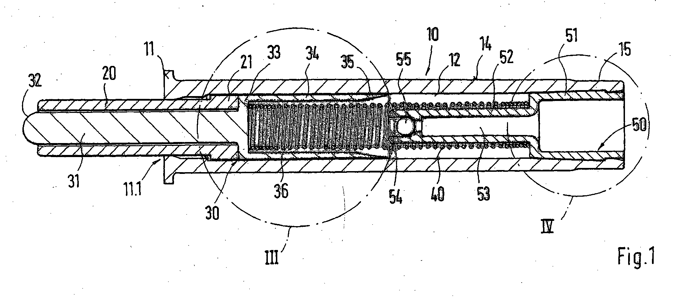

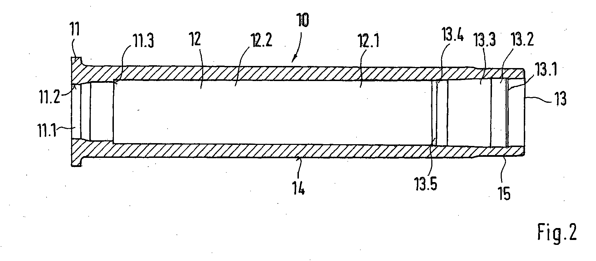

In der Figur 1 ist ein Anschlagdämpfer mit einem Dämpferkörper 10 dargestellt. Der Dämpferkörper 10 ist im Detail der Figur 2 entnehmbar. Wie diese Darstellung zeigt, weist der Dämpferkörper 10 eine im Wesentlichen zylindrische, lang gestreckte und rohrförmige Geometrie auf. Er umschließt einen Aufnahmeraum 12, der am hinteren Dämpferende über eine Montageöffnung 13 und am vorderen Ende über eine Durchtrittsöffnung 11.1 zugänglich ist.

An die Montageöffnung 13 schließt sich eine konische Querschnittsverjüngung an, die eine Auflaufschräge bildet. Die Auflaufschräge geht in eine steile, radial gerichtete Rastflanke 13.1 über. An die Rastflanke 13.1 schließt ein durchmesservergrößerter zylindrischer Dichtabschnitt 13.2 an. Der Dichtabschnitt 13.2 geht in konisch ausgebildete Freimachung 13.3 über und diese in einen weiteren zylindrischen Dichtabschnitt 13.4.

Die Freimachung 13.3 weist eine leichte Konizität mit geringem Konuswinkel auf, wobei sie sich in Richtung zur Durchtrittsöffnung 11.1 hin verjüngt. Nach dem zweiten Dichtabschnitt 13.4 ist ein durchmesserverjüngter Anschlagbereich 13.5 vorgesehen. Im Anschluss an den Anschlagbereich 13.5 weist der Aufnahmeraum 12 eine Gleitfläche 12.1 auf, die in Richtung zur Durchtrittsöffnung 11.1 in einen Anlegeabschnitt 12.2 ausläuft.

Die Durchtrittsöffnung 11 wird von einer Gleitführung 11.2 begrenzt. Zwischen der Durchtrittsöffnung 11.1 und dem Anlegeabschnitt 12.2 ist ein Anschlag 11.3 als Durchmesserreduzierung angeformt.

Die Gleitfläche 12.1 weist eine zylindrische Geometrie auf. Der Anlegeabschnitt 12.2 hingegen ist mit einem kleinen Konuswinkel ausgeführt, wobei der Anlegeabschnitt 12.2 im Anschlussbereich an die Gleitfläche 12.1 ihren größten Durchmesser aufweist und sich in Richtung zur Durchtrittsöffnung 11.1 hin verjüngt.

Wie die Figur 1 zeigt, ist in den Aufnahmeraum 10 eine Kombination, bestehend aus einem Kolben 33 mit angeformter Kolbenstange 31 und einem Stützkörper 20 eingesetzt. Der Kolben 33 trägt einen angeformten, röhrenförmig ausgestalteten Balgabschnitt 34, der in einem endseitigen Dichtelement 35 ausläuft. Das Dichtelement 35 ist als dünne, umlaufende Dichtlippe ausgeführt. Der Balgabschnitt 34 umschließt eine Federaufnahme 36. An der dem Balgabschnitt 34 abgewandten Seite ist an den Kolben 33 die Kolbenstange 31 einteilig angeformt. Sie schließt mit einer Endkappe 32 ab.

Der Kolben 33 inklusive der Kolbenstange 31 sind aus einem weichelastischen Werkstoff hergestellt. Um ein Ausknicken der Kolbenstange 31 zu verhindern ist diese von dem röhrenförmigen Stützkörper 20 aus härterem Material umgeben.

Im Anschlussbereich an den Kolben 33 liegt der Stützkörper 22 mit einem Anschlagelement 21 an dem Kolben 33 an. Das Anschlagelement 21 ist dabei als durchmesserverbreiterte Bundabschnitt ausgeführt.

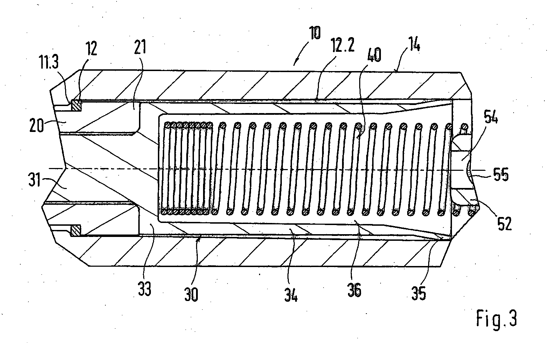

Wie die Figur 3 veranschaulicht, ist der Balgabschnitt 34 in der in Figur 1 gezeigten Ausgangsstellung im Bereich des Anlageabschnittes 12.2 des Dämpferkörpers 10 positioniert. Dabei steht die zylindrische Außenkontur des Balgabschnittes 34 umlaufend in kleinem Abstand zu dem Anlegeabschnitt 12.2. Das Dichtelement 35 ist im Bereich der Gleitfläche 12.1 angeordnet und liegt an dieser an.

Der Stützkörper 20 verhindert mit seinem Anschlagelement 21 an dem Anschlag 11.3 ein Herausziehen des Kolbens 33 durch die Durchtrittsöffnung 11.1.

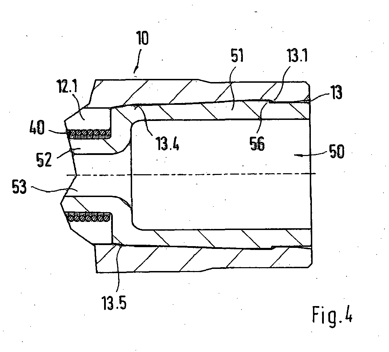

Wie die Figur 1 zeigt, ist das der Montageöffnung 13 zugewandte Ende des Dämpferkörpers 20 mit einem Verschlusselement 50 ausgefüllt. Die Gestaltung des Verschlusselementes 50 geht näher aus der Figur 4 hervor, auf die nachfolgend Bezug genommen wird.

Das Verschlusselement 50 besitzt einen Dichtkörper 51, der, angepasst an die Dichtabschnitte 13.2, 13.4 ausgeformte zylindrische Außenkonturbereiche aufweist. Dabei sind diese Bereiche mit Übermaßpassung so ausgestaltet, dass sich ein luftdichter Passsitz bildet. An den topfförmig ausgebildeten Dichtkörper 51 schließt eine Rastaufnahme 56 an. In deren Anschluss läuft das Verschlusselement 50 in einem durchmesserreduzierten Endabschnitt aus. Die Einsetzbewegung des Verschlusselementes 50 wird am Anschlagbereich 13.5 begrenzt.

Der Rastaufnahme 56 abgekehrt ist an das Verschlusselement 50 eine Federaufnahme 52 in Form eines zylindrischen Körpers angeformt, in den ein Kanal 53 eingebracht ist.

Wie die Figur 1 weiter erkennen lässt, ist in das dem Dichtkörper 51 abgewandte Ende der Federaufnahme 52 eine Bohrung 54 eingebracht. Diese Bohrung 54 geht über eine Querschnittsverjüngung in den Kanal 53 über. Zwischen der Querschnittsverjüngung und der Bohrung 54 ist ein Sitz gebildet, an dem ein in die Bohrung 54 eingepresstes Einlegeteil 55, vorliegend eine Metallkugel, anliegt.

Die Kugel versperrt den Luftweg zwischen der Bohrung 54 und der Umgebung. Um nun gleichwohl eine luftleitende Verbindung zwischen dem Aufnahmeraum 12 und der Umgebung zu erhalten, ist in die Wandung der Bohrung wenigstens eine in Längsrichtung des Dämpferkörpers 10 verlaufende Rille eingearbeitet. Der Rillenquerschnitt wird nicht von dem Einlegeteil 55 überdeckt, so dass sich die luftleitende Verbindung mit genau vorgegebenem Luftdurchtrittsquerschnitt reproduzierbar ergibt.

Die Federaufnahme 52 nimmt ein als Schraubenfeder ausgebildetes Federelement 40 auf, wobei sie sich mit ihrem einen Ende an dem Dichtkörper 51 abstützt. Dem Dichtkörper 51 abgekehrt ist das Federelement 40 in die vom Balgabschnitt 34 umgebene Federaufnahme 36 eingestellt. Sie stützt sich dort endseitig am Kolben 33 ab, so dass der Kolben 33 gegen die Einschubrichtung des Kolbens 33 vorgespannt ist.

Zur Montage des Anschlagdämpfers wird zunächst der Stützkörper 20 auf die Kolbenstange 31 aufgefädelt. Dann wird diese Baugruppe durch die Montageöffnung 13 in den Aufnahmeraum 12 eingeschoben.

Dabei wird das Stützteil 20 durch die Durchtrittsöffnung 11.1 geschoben. Die zylindrische Außenkontur des Stützkörpers 20 ist an der Gleitführung 11.2 exakt geführt. Anschließend wird das Federelement 40 in die Federaufnahme 36 des Balgabschnittes 34 eingestellt. Dann kann das Verschlusselement 50 mit seiner Federaufnahme 52 in das Federelement 40 eingeschoben werden. Das Federelement 40 wird dann gespannt, wenn das Verschlusselement 50 durch die Montageöffnung 13 geschoben wird. Das Verschlusselement 50 wird anschließend in die Dichtabschnitte 13.2, 13.4 gepresst, wobei gleichzeitig die Rastflanke 13.1 die Rastaufnahme 56 hinterschnappt.

Die Funktionsweise des Anschlagdämpfers ist wie folgt:

Ausgehend von der in Figur 1 gezeigten Ausgangsstellung wird eine Kraft auf die Endkappe 32 der Kolbenstange 31 aufgebracht.

Diese Kraft wird beispielsweise von einer auftreffenden Tür, Klappe, Schublade, eines Beschlagteils (beispielsweise eines Scharniers) aufgebracht. Infolge dieser Kraft wird der Kolben 33 in Richtung zur Montageöffnung 13 verstellt. Dabei wird in dem vom Balgabschnitt 34 begrenzten Teil des Aufnahmeraumes 12 ein Druck aufgebaut, der größer ist als der den Balgabschnitt 34 umgebende Bereich des Aufnahmeraumes 12. Aufgrund dieses Druckunterschiedes wird der Balgabschnitt 34 aufgebläht. Dabei legt sich der Balgabschnitt 34 mit seinem Außenumfang an die Innenwandung des Anlegeabschnittes 12.2 an. Aufgrund der Konizität des Anlegeabschnittes 12.2 ist der Abstand des Balgabschnittes 34 zum Anlegeabschnitt 12.2 klein, so dass schnell eine Bremswirkung infolge der Reibung zwischen dem Balgabschnitt 34 und dem Anlegeabschnitt 12.2 erreicht ist. Der Kolben 33 bewegt sich nun in Richtung zu der Montageöffnung 13. Somit verbreitert sich auch der mit dem Balgabschnitt 34 in Verbindung stehende Bremsbereich des Anlegeabschnittes 12.2.

Damit muss in den Balgabschnitt 34 zusätzlich durch den Druckunterschied bewirkte Dehnarbeit zugeführt werden. Dieser Effekt stellt sicher, dass aus der Ausgangsstellung heraus zwar schnell Bremskraft aufgebaut wird, diese jedoch nicht stoßartig generiert und beibehalten wird. Damit ist verhindert, dass der Kolben 33 quasi statisch den Aufprall der Tür etc. auffangen würde und impulsartig wieder teilweise an die Tür etc. zurückgibt. Die aufprallende Tür etc. federt somit nicht oder nur wenig zurück.

Das Dichtelement 35 stellt eine gleichmäßig gute Dichtwirkung dadurch sicher, dass es am zylindrischen Bereich der Gleitfläche 12.1 entlang gleitet.

Nachdem der Balgabschnitt 34 einen wesentlichen Teil der Energie abgebaut hat, wird er noch zur Vergleichmäßigung des Bewegungsablaufes an der zylindrischen Gleitfläche 12.1 geführt.

Während des Kompressionshubes wird kontinuierlich Druck über den Bypass am Einlegeteil 55 vorbei abgebaut. Dieser Druckabbau geschieht aufgrund des kleinen Bypassquerschnittes sehr langsam, so dass die kontinuierliche Dämpfung sichergestellt ist.

Wenn die Kolbenstange 31 entlastet wird, drückt das Federelement 40 den Kolben 33 kontinuierlich aus der Einschubstellung in die in Figur 1 gezeigte Ausgangsstellung. Dabei erfolgt ein Druckausgleich über den Bypass. Bei der Rückstellung liegt der Balgabschnitt 34 nicht mehr am Dämpferkörper 10 an.

Sowohl die Gleitfläche 12.1 als auch der Anlegeabschnitt 12.2 werden von einer Rillenstruktur erzeugt. Dabei verläuft die Längserstreckung der Rillen quer zur Bewegungsrichtung des Kolbens 33. Die Rillenstruktur wird dabei in der Werkzeugform (dem Spritzgießwerkzeug) vorgegeben.

Vorzugsweise wird über eine gedrehte Oberfläche eine Rillenstruktur erzeugt, so dass die an der Innenwandung des Zylinders umlaufende Rillen im Winkel zu der Bewegungsrichtung des Kolbens 33 stehen. Der Winkel (Vorschub) ist dabei ausreichend klein, vorliegend < 5°so dass das lippenförmige Dichtelement 35 im Dichtbereich stets nur eine geringe Anzahl (< 20 Rillen) von Rillen überfährt. Damit ist ein optimales Gleit- und Verschleißverhalten des Dichtelementes 35 erreicht.

Die in der Figur 12 veranschaulichte Rillenstruktur stellt eine ausreichende Dichtwirkung sicher, so dass das Dichtelement den Druckaufbau sicherstellt.

Die Rillenstruktur (die Negativkontur des Werkzeuges) kann poliert sein, so dass die Rillenstruktur von Stegen gebildet wird. Diese Rillenstruktur hat einen hohen Tragteil, die die Gleiteigenschaften optimal beeinflusst.

## Patentansprüche

1. Anschlagdämpfer mit einem Dämpferkörper (10), der einen Aufnahmeraum (12) aufweist, in dem ein Kolben (33) zwischen einer Ausgangs- und einer Einschubstellung verstellbar geführt ist, wobei der Kolben einen Balgabschnitt (34) und ein Dichtelement (35) aufweist, wobei das Dichtelement (35) an einer Gleitfläche (12.1) des Dämpferkörpers (10) anliegt, und wobei der Balgabschnitt (34) an der Ausgangsstellung einem Anlegeabschnitt (12.2) des Dämpferkörpers (10) zugeordnet ist,
**dadurch gekennzeichnet,**
**dass** der Anlegeabschnitt (12.2) zumindest bereichsweise einen sich in Richtung der Einschubbewegung des Kolben (33) erweiternden Bereich aufweist.

2. Anschlagdämpfer nach Anspruch 1,
**dadurch gekennzeichnet,**
**dass** der sich erweiternde Bereich des Anlegeabschnittes (12.2) konisch, insbesondere als konische Bohrung ausgebildet ist, die einem umlaufenden Wandungsabschnitt des Balgabschnittes (34) zugeordnet ist.

3. Anschlagdämpfer nach Anspruch 2,
**dadurch gekennzeichnet,**
**dass** der umlaufende Wandungsabschnitt des Balgabschnittes (34) eine zylindrische Kontur aufweist.

4. Anschlagdämpfer nach einem der Ansprüche 1 bis 3,
**dadurch gekennzeichnet,**
**dass** der Balgabschnitt (34) in der Ausgangsstellung dem sich konisch erweiternden Bereich des Anlegeabschnittes (12.2) zugeordnet ist.

5. Anschlagdämpfer nach einem der Ansprüche 1 bis 4,
**dadurch gekennzeichnet,**
**dass** das Dichtelement (35) zwischen der Ausgangsstellung und der Einschubstellung längs eines zylindrischen Bereiches der Gleitfläche geführt ist.

6. Anschlagdämpfer nach einem der Ansprüche 1 bis 5,
**dadurch gekennzeichnet,**
**dass** der Balgabschnitt (34) bei der Einschubbewegung im Anschluss an den Anlegeabschnitt (12.2) einen zylindrischen Bohrungsbereich oder einen Bohrungsbereich mit geänderten Konizitätswinkel überfährt.

7. Anschlagdämpfer nach einem der Ansprüche 1 bis 6,
**dadurch gekennzeichnet,**
**dass** die Oberflächenrauhtiefe des Dichtelementes (35) und/oder der Gleitfläche (12.2) und/oder des Anlegeschnittes (12.2) von einer periodischen Struktur, beispielsweise einer Rillenstruktur erzeugt ist.

8. Anschlagdämpfer nach einem der Ansprüche 1 bis 7,
**dadurch gekennzeichnet,**
**dass** die Rillen der Rillenstruktur in ihrer Längserstreckung quer zu Bewegungsrichtung des Kolbens (33) angeordnet sind.

9. Anschlagdämpfer nach Anspruch 7 und 8,
**dadurch gekennzeichnet,**
**dass** die Rillen der Rillenstruktur umlaufend und quer zur Bewegungsrichtung des Kolbens (33) in die Gleitfläche (18) des Dichtelementes (35) und/oder den Anlegeabschnitt (12.1) eingetieft sind, und
**dass** die Rillen gegenüber der Bewegungsrichtung des Kolbens (33) im Winkel (≥ 0 und < 90°) stehen.

10. Anschlagdämpfer nach Anspruch 9,
**dadurch gekennzeichnet,**
**dass** der Anstellwinkel der Rillen so gewählt ist, dass das ringförmig umlaufende Dichtelement (35) über seinen gesamten Umfang nur eine geringe Anzahl von Rillen übergreift.

## Claims

1. Stop damper having a damper body (10) which has an accommodating space (12) in which a piston (33) is guided in an adjustable manner between a starting position and pushed-in position, wherein the piston has a bellows portion (34) and a sealing element (35), wherein the sealing element (35) bears against a sliding surface (12.1) of the damper body (10), and wherein the bellows portion (34) is assigned in the starting position to an abutment portion (12.2) of the damper body (10), **characterized in that** the abutment portion (12.2) has at least regionally a region that widens in the direction of the pushing-in movement of the piston (33).

2. Stop damper according to Claim 1, **characterized in that** the widening region of the abutment portion (12.2) is formed in a conical manner, in particular as a conical bore, which is assigned to an encircling wall portion of the bellows portion (34).

3. Stop damper according to Claim 2, **characterized in that** the encircling wall portion of the bellows portion (34) has a cylindrical contour.

4. Stop damper according to one of Claims 1 to 3, **characterized in that** the bellows portion (34) is assigned in the starting position to the conically widening region of the abutment portion (12.2).

5. Stop damper according to one of Claims 1 to 4, **characterized in that** the sealing element (35) is guided between the starting position and the pushed-in position along a cylindrical region of the sliding surface.

6. Stop damper according to one of Claims 1 to 5, **characterized in that**, during the pushing-in movement, the bellows portion (34) moves, after the abutment portion (12.2), over a cylindrical bore region or a bore region having an altered taper angle.

7. Stop damper according to one of Claims 1 to 6, **characterized in that** the surface roughness of the sealing element (35) and/or of the sliding surface (12.1) and/or of the abutment portion (12.2) is produced by a periodic structure, for example a groove structure.

8. Stop damper according to one of Claims 1 to 7, **characterized in that** the grooves of the groove structure are arranged in their longitudinal extent transversely to the movement direction of the piston (33).

9. Stop damper according to Claims 7 and 8, **characterized in that** the grooves of the groove structure are cut into the sliding surface (18) of the sealing element (35) and/or the abutment portion (12.2) in an encircling manner and transversely to the movement direction of the piston (33), and **in that** the grooves are at an angle (≥0 and <90°) to the movement direction of the piston (33).

10. Stop damper according to Claim 9, **characterized in that** the incidence angle of the grooves is selected such that the annularly encircling sealing element (35) engages over only a small number of grooves over its entire circumference.

## Revendications

1. Amortisseur de butée comprenant un corps d'amortisseur (10) qui présente un espace de réception (12) dans lequel est guidé de manière déplaçable un piston (33) entre une position de sortie et une position d'enfoncement, le piston présentant une portion de soufflet (34) et un élément d'étanchéité (35), l'élément d'étanchéité (35) s'appliquant contre une surface de glissement (12.1) du corps d'amortisseur (10), et la portion de soufflet (34) étant associée au niveau de la position de sortie à une portion d'appui (12.2) du corps d'amortisseur (10),
**caractérisé en ce que**
la portion d'appui (12.2) présente au moins en partie une région s'élargissant dans la direction du mouvement d'enfoncement du piston (33).

2. Amortisseur de butée selon la revendication 1,
**caractérisé en ce que**
la région de la portion d'appui (12.2) s'élargissant est réalisée sous forme conique, notamment sous forme d'alésage conique, qui est affecté à une portion de paroi périphérique de la portion de soufflet (34).

3. Amortisseur de butée selon la revendication 2,
**caractérisé en ce que**
la portion de paroi périphérique de la portion de soufflet (34) présente un contour cylindrique.

4. Amortisseur de butée selon l'une quelconque des revendications 1 à 3,
**caractérisé en ce que**
la portion de soufflet (34) dans la position de sortie est associée à la région de la portion d'appui (12.2) s'élargissant coniquement.

5. Amortisseur de butée selon l'une quelconque des revendications 1 à 4,
**caractérisé en ce que**
l'élément d'étanchéité (35) est guidé entre la position de sortie et la position d'enfoncement le long d'une région cylindrique de la surface de glissement.

6. Amortisseur de butée selon l'une quelconque des revendications 1 à 5,
**caractérisé en ce que**
la portion de soufflet (34), lors du mouvement d'enfoncement à la suite de la portion d'appui (12.2), passe une région d'alésage cylindrique ou une région d'alésage ayant un angle de conicité modifié.

7. Amortisseur de butée selon l'une quelconque des revendications 1 à 6,
**caractérisé en ce que**
la profondeur de rugosité de surface de l'élément d'étanchéité (35) et/ou de la surface de glissement (12.1) et/ou de la portion d'appui (12.2) est produite par une structure périodique, par exemple une structure rainurée.

8. Amortisseur de butée selon l'une quelconque des revendications 1 à 7,
**caractérisé en ce que**
les rainures de la structure rainurée sont disposées dans leur étendue longitudinale transversalement à la direction de déplacement du piston (33).

9. Amortisseur de butée selon les revendications 7 et 8,
**caractérisé en ce que**
les rainures de la structure rainurée sont enfoncées circonférentiellement et transversalement à la direction de déplacement du piston (33) dans la surface de glissement (18) de l'élément d'étanchéité (35) et/ou dans la portion d'appui (12.2), et
**en ce que** les rainures sont orientées par rapport à la direction de déplacement du piston (33) suivant un angle ≥ 0 et < 90°.

10. Amortisseur de butée selon la revendication 9,
**caractérisé en ce que** l'angle d'inclinaison des rainures est choisi de telle sorte que l'élément d'étanchéité (35) orienté de manière annulaire sur la périphérie vienne en prise par le dessus sur toute sa circonférence uniquement avec un faible nombre de rainures.
